# DEMANDE DE BREVET EUROPEEN

(11) **EP 1 152 600 A2**
(43) Date de publication de la demande: **07.11.2001**
(21) Numéro de dépôt: 01400936.9
(22) Date de dépôt: 11.04.2001
(51) Int. Cl.: H04N 5/00, H04N 7/16, H04M 1/247, H04N 5/445

(54) **Décodeur de télévision et passerelle pour internet et site internet correspondant**

(30) Priorité: 18.04.2000 FR 0005011
(71) Demandeur: SAGEM S.A., 75015 Paris (FR)
(72) Inventeur: Meulle, Philippe, 78300 Poissy (FR)
(74) Mandataire: Schmit, Christian Norbert Marie

(57) **Abrégé**

Pour simplifier la réalisation des décodeurs de télévision on prévoit de leur faire interpréter des messages composés selon le langage de programmation WML. On montre qu'en agissant ainsi on réduit notablement les exigences de taille mémoire et de taille de microprocesseur de traitement nécessaires pour montrer sur un moniteur de télévision des messages Internet qui, autrement, exigeraient un logiciel et des moyens de traitement puissants.

## Description

La présente invention a pour objet un décodeur de télévision perfectionné pour la visite des sites Internet. Elle a également pour objet une passerelle d'accès au réseau Internet ainsi qu'un site Internet correspondant L'invention vise à simplifier les décodeurs de télévision.

Les décodeurs de télévision sont des organes interface entre des systèmes de transmission de signaux de télévision, notamment de signaux de télévision numérique au format MPEG et DVB, et des moniteurs de visualisation. Souvent le moniteur comporte en lui-même des circuits de décodage de ces signaux de télévision mais ce n'est pas une obligation. Les signaux échangés sont le plus souvent des signaux numériques, mais un décodeur peut aussi avoir des facultés de traitement de signaux analogiques. Les moyens de transmission qui transmettent des émissions de télévision à ces décodeurs récepteurs sont soit des aériens classiques, soit des câbles coaxiaux, voire optiques, soit des satellites de réémission qui desservent une région.

Il a par ailleurs déjà été envisagé de mettre des téléspectateurs en relation avec le réseau Internet. Cette relation nécessite une relation montante, pour que l'utilisateur émette une requête en visualisation du contenu d'un site Internet, ou de réception d'un fichier, et une liaison descendante pour que le récepteur puisse recevoir les informations correspondant à un site questionné. Autant pour la liaison descendante on peut se déterminer pour une transmission de type télédiffusion, les informations destinées à un téléspectateur étant alors transmises dans le flux des données, imbriquées avec des signaux d'information de télévision, autant pour l'émission de requêtes, on s'achemine vers la connexion d'un décodeur au réseau Internet par l'intermédiaire d'une liaison téléphonique. Souvent, le décodeur comporte à cet effet un simple modem pour être relié simplement au réseau téléphonique commuté.

Le problème présenté par de telles solutions réside dans la puissance de traitement nécessaire pour émettre les requêtes et recevoir les signaux provenant du réseau Internet. En effet, du fait de la diversité des sites accessibles sur Internet, le langage dit HTML dans lequel sont composés les contenus de ces sites est un langage puissant. Pour pouvoir visualiser le contenu de ces sites, un récepteur doit alors comporter un logiciel navigateur, lui aussi très puissant pour interpréter toutes les facultés de transmission des messages reçus, insertion d'images dans le texte, traitement des images pour en autoriser une mobilité, un agrandissement, une association de commentaires et ainsi de suite. En pratique, en terme d'occupation en mémoire un tel navigateur, susceptible de comprendre tous les formats d'images (JPEG, TIF, GIF et autres), nécessite une capacité additionnelle de l'ordre de plusieurs Mega-octets. Une telle capacité peut induire en elle-même la réalisation dans le décodeur d'une mémoire de masse, par exemple d'un disque dur, pour stocker toutes les informations utiles et d'une mémoire de travail plus importante (normalement dynamique, volatile et très rapide) pour charger et exécuter le programme de ce navigateur. Le microprocesseur pour mettre en oeuvre ce programme de navigation est également un microprocesseur puissant. Alternativement, les mémoires peuvent être remplacées par des mémoires à accès aléatoire préprogrammées et non volatiles, notamment de type EEPROM, mais de telles mémoires sont chères, moins rapides et conduisent de toute façon à utiliser un microprocesseur performant donc cher.

Par ailleurs, un modem relié à un décodeur pour servir de liaison avec le réseau Internet doit, dans le cadre de telles navigations, être un modem performant, capable d'un fort débit binaire. Le coût d'un tel modem est alors aussi élevé.

Dans l'invention, pour résoudre ce problème de performance, sans augmenter le coût du décodeur, on prévoit de mettre en oeuvre dans le décodeur, ou dans un téléviseur qui serait muni de moyen de décodage, un procédé de type WAP (Wireless Application Protocol - Procédé de Traitement Sans fil), prévu pour la visite de sites Internet dans le cadre de la téléphonie mobile. Un tel procédé WAP est présenté sur le site Internet www.zurich.ibm.com. Ce procédé WAP est adapté à un langage de programmation WML (Wireless Markup Langage - Langage hypertexte sans fil). Un tel langage est notamment décrit dans le site Internet www.wirelessdevnet.com. Les messages composés au moyen du langage WML sont ensuite transmis selon un protocole de type WTP (Wireless Transaction Protocol - protocole de transaction sans fil) du procédé WAP. On pourrait toutefois prévoir dans l'invention qu'ils soient transmis selon le protocole HTTP.

L'objet d'un tel langage WML et d'un tel protocole WTP est de mettre à disposition des utilisateurs de téléphone mobiles des informations disponibles sur Internet. Il existe ainsi un parallèle entre le langage HTML pour les applications Internet classiques (en particulier avec un ordinateur de type dit PC compatible), et le langage WML pour les applications Internet sur téléphone mobile. Pour simplifier, le langage WML peut être reconnu comme une simplification du langage HTML, certaines options du langage HTML étant soit ignorées soit interprétées différemment, et réciproquement.

Le même parallèle existe entre les protocoles de transfert HTTP (hyper text transfer protocol - protocole de transfert hypertexte) et WTP. Les protocoles de transfert d'information peuvent être ainsi modifiés pour passer du protocole HTTP au protocole WTP.

Dans l'invention pour donner une aptitude à visualiser des sessions Internet à un décodeur, on peut procéder de deux façons. Soit on met un téléphone mobile en relation avec le décodeur. Cette relation peut être par exemple hertzienne, en particulier de type Blue Tooth. Ou bien cette relation peut être électrique, le téléphone mobile étant connecté au décodeur par une prise de fond de boîtier. Soit autrement le décodeur est relié par un modem au réseau Internet. Dans les deux cas cependant, le décodeur ne comportera que des moyens de traiter des messages composés avec un langage WML, et transmis selon un protocole WTP, ou HTTP. Dans les faits, les signaux aux protocoles WTP ou HTTP sont eux-mêmes formatés selon un format de téléphonie mobile, format GSM data notamment, dans un cas, ou dans un format de téléphonie fixe (notamment un format numérisé) dans l'autre cas.

Un langage WML est un langage basé sur XML, c'est à dire basé sur ses possibilités de décrire des données, alors que le langage HTML est utilisé en plus pour décrire un mode d'affichage de données. Un langage XML prévoit la constitution de règles connues sous le nom de DTD (Document Type Definition - définition du type de document). Dans ce cas, un appareil dit WAP-capable est un appareil qui possède un logiciel de micronavigation qui est capable de comprendre parfaitement toutes les informations échangées selon la norme WML 1.1 DTD. Dans l'invention, le décodeur de télévision sera justement du type WAP-capable, c'est-à-dire muni d'une telle interface WAP.

L'invention a donc pour objet un décodeur de télévision comportant un microprocesseur, une mémoire programme, une interface téléphonique et une interface avec un moniteur de télévision, caractérisé en ce que la mémoire programme comporte un sous-programme apte à recevoir des messages écrits en un langage de type WML et un programme pour afficher ces messages sur le moniteur.

L'invention a encore pour objet une passerelle d'accès au réseau Internet comportant un organe pour prélever des messages en langage de type WML dans un site Internet, un organe pour encapsuler les messages prélevés selon un protocole de type WTP, caractérisée en ce que, pour un décodeur de télévision, elle comporte un organe pour formater ces messages encapsulés en un format compatible avec une transmission sur un réseau téléphonique commuté.

Elle a enfin pour objet un site Internet, caractérisé en ce qu'il comporte des moyens pour délivrer des messages composés en langage WML représentant des images de menus de réglage de décodeurs de télévision.

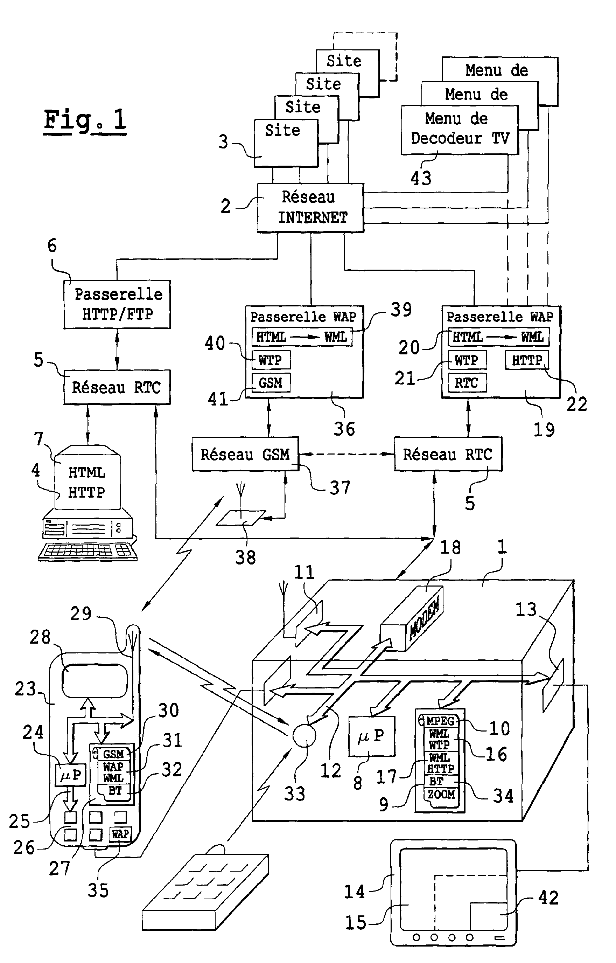

L'invention sera mieux comprise à la lecture de la description qui suit et à l'examen de la figure qui l'accompagne. Celles-ci ne sont présentées qu'à titre indicatif et nullement limitatif de l'invention. La figure 1 unique montre un décodeur de télévision, une passerelle Internet et un site Internet conforme à l'invention.

La figure 1 montre un décodeur 1 conforme à l'invention. Le décodeur 1 est destiné à entrer en relation, par l'intermédiaire du réseau Internet 2 avec un site Internet tel que 3. Dans ce but, plusieurs moyens sont déjà connus. Par exemple, un micro-ordinateur 4 peut comporter pour une liaison au réseau Internet 2, via un réseau téléphonique commuté 5 et une passerelle d'accès 6 classique au réseau Internet, des moyens notamment logiciels de montrer sur un écran 7 de ce micro-ordinateur des images correspondant à des visites de sites 3 du réseau Internet 2. Ces visites se concrétisent essentiellement par le transfert entre le site 3 et le micro-ordinateur 4 de fichiers informatiques composés au moyen d'un logiciel de type HTML et transmis selon un protocole de type HTTP. Le micro-ordinateur 4 comporte alors des moyens équivalents pour recevoir et interpréter ces fichiers. Dans un mode de transmission de fichiers pur, un autre protocole de transfert dit FTP peut être utilisé,

Selon l'état de la technique, le décodeur 1 pourrait être muni des moyens logiciels rappelés ci-dessus, avec disque dur, mémoire de travail et microprocesseur puissants, mais aussi avec en contrepartie un coût élevé.

Dans l'invention, on tire parti du fait qu'un décodeur 1 possède déjà un microprocesseur 8 (mais pas trop puissant) et d'une mémoire programme 9 comportant un sous-programme 10 (assez court), préprogrammé, de traitement des images de télévision que le décodeur est censé recevoir. Ce sous-programme 10, dit ici MPEG pour rappeler qu'il traite essentiellement des signaux à la norme MPEG, permet au microprocesseur 8 de recevoir, d'une interface 11 de transmission de signaux de télévision, des signaux de télévision émis par un émetteur. Le microprocesseur 8, la mémoire 9 et l'interface 11 sont reliés entre eux par un bus 12. Un émetteur de signaux de télévision peut comporter un réémetteur hertzien en transmission terrestre, un satellite en transmission régionale, ou un câble dans le cadre de la télédistribution. Les signaux disponibles à l'interface 11 sont traités par le processeur 8 puis envoyés sur une interface 13 reliée au bus 12. L'interface 13 dans un exemple peut être une prise péritel. L'interface 13 est par ailleurs reliée à un moniteur 14 sur lequel sont montrées des images correspondant aux signaux de télévision reçus.

Du fait de l'existence de ces moyens, et sans qu'il soit nécessaire notamment d'augmenter la puissance du microprocesseur 8, dans l'invention on est capable de faire afficher sur l'écran 15 du moniteur 14 une image représentative d'informations prélevées dans un site Internet tel que 3. Dans ce but, la mémoire programme 9 est préprogrammée pour contenir un sous-programme 16 et ou un sous-programme 17 de réception et d'interprétation de fichier compatible avec le procédé WAP. Dans ce but elle comporte un sous-programme 16 dit ici WTP-WML, et ou un sous-programme 17 dit ici HTTP-WML, pour recevoir d'une part et interpréter d'autre part des messages transmis selon le protocole WTP ou HTTP respectivement. Ce sous-programme 16 et ou 17 est bien moins conséquent qu'un sous-programme de navigation et de visualisation compatible avec la norme HTML du fait que le langage HTML n'est ici plus utilisé.

En montrant ainsi sur l'écran 15 une image correspondant à un message émanant d'un site 3, on adopte de fait un format d'image du type de celui montrable avec un téléphone mobile, c'est-à-dire typiquement avec 128x128 pixels. L'image correspondante peut ainsi être placées par un dispositif d'incrustation du décodeur 1 en un endroit particulier sur l'écran 15, par exemple dans le coin inférieur droit. On verra plus loin comment améliorer la présentation d'une telle image de taille réduite et la présenter avec la visualisation d'une émission de télévision.

Le décodeur 1 peut recevoir les messages composés selon le langage WML de plusieurs façons. D'une part avec un modem 18 relié au bus 12 il peut être relié au réseau téléphonique commuté 5. Par ce réseau 5, il peut être en relation avec une passerelle 19 selon l'invention. Cette passerelle 19 est munie de moyens analogues à ceux de passerelles de l'état de la technique pour traiter des messages qu'elle achemine. Le traitement y est cependant différent (et sa mémoire programme est différente). Cette mémoire programme peut notamment comporter un sous-programme 20 de traduction en langage WML de messages initialement prélevés dans un site 3 et qui seraient composés selon un langage HTML. Le sous-programme 20 est alors un sous-programme de traduction. Ou bien les messages ont été directement composés en langage WML et sont extrait tels quels des sites Internet.

Pour le transfert proprement dit, la passerelle 19 mettra en oeuvre, selon un protocole demandé par le modem 18 lors d'une reconnaissance préalable, soit un protocole 21 de type WTP soit un protocole 22 de type HTTP. Dans tous les cas les messages ainsi encapsulés selon ces protocoles seront ensuite formatés pour convenir à un mode de transmission point à point (selon un format PPP) par le réseau téléphonique commuté 5. La transmission point à point peut notamment être numérique ou analogique sur le réseau RTC. La passerelle comportera des moyens dit ici RTC dans ce but.

En variante, le décodeur 1 recevra ses messages par l'intermédiaire d'un téléphone mobile 23 muni d'une manière connue d'un microprocesseur 24 en relation par un bus 25 avec un clavier 26, une mémoire programme 27, un écran 28, et des moyens d'émission réception symbolisés par une antenne 29. D'une manière connue la mémoire 27 comportera un programme de téléphonie mobile 30, intitulé ici GSM, et d'un sous-programme 31 de type WTP-WML lui permettant de recevoir selon un protocole WTP des messages composés avec un langage WML. Selon un perfectionnement de l'invention, le téléphone mobile 23 comportera un moyen de transmettre les messages en langage WML reçus au décodeur 1. Ces messages peuvent être transmis au décodeur 1 par émission radioélectrique, par l'antenne 29, notamment selon la norme Blue Tooth. Dans ce cas la mémoire programme 27 comportera un sous-programme 32 correspondant (intitulé BT, Blue Tooth). En correspondance, le décodeur 1 comportera une interface radioélectrique 33 reliée au bus 12, et dans la mémoire programme 9 un sous-programme 34 correspondant (intitulé aussi ici BT). Toutefois, on peut se passer de cette faculté de transmission radioélectrique en reliant le téléphone mobile 23 au décodeur 1, notamment en reliant les bus respectifs 25 et 12 par l'intermédiaire d'un connecteur de fond de boîtier du téléphone mobile. Dans ce cas, un des deux appareils peut utiliser les ressources électroniques de l'autre. Un sous ensemble des circuits électroniques du téléphone mobile 23 peut notamment être directement inclus dans les circuits du décodeur.

Pour la retransmission, le téléphone mobile 23 comportera une touche spécifique 35 de son clavier intitulé WAP, ou une combinaison de touches équivalentes, pour provoquer le transfert au décodeur 1 des messages Internet qui lui étaient destinés. La retransmission peut comporter, ou prendre la place de la visualisation des messages sur l'écran 28. Tels quels, ces messages sont destinés à être affichés sur l'écran 28. Avec le sous-programme 32 lancé par la touche 35, ces messages sont renvoyés sur le décodeur 1 où le sous-programme 16 permet de les recevoir de les interpréter et de les montrer sur le moniteur 14.

Dans ce cas, les messages Internet proviennent d'une passerelle 36 reliée d'une part au réseau Internet 2 et d'autre part à un réseau 37 de téléphonie mobile avec lequel le téléphone mobile 23 entre en relation, par exemple par l'intermédiaire d'une station de base 38. La passerelle 36 de type connu comporte des moyens logiciels 39 pour recevoir des messages composés en un langage WML ou traduit d'un langage HTML en langage WML, et des moyens logiciels 40 pour encapsuler ces messages selon un protocole WTP. En aval de ces traitements, les messages encapsulés sont formatés selon un format de téléphonie mobile par des moyens 41, notamment de type GSM. D'autres formats sont également envisageables : notamment les formats GPRS pour une transmission en mode de paquet sur le réseau GSM, ou encore des formats selon des autres normes de téléphonie mobile, notamment le format de la norme UMTS des téléphones mobiles de troisième génération. On notera que le formatage 41 connu, ici de type GSM, est remplacé dans la passerelle 19 selon l'invention par un formatage RTC.

Le téléphone mobile 23 peut également servir dans ce cas de télécommande d'une part et de moyen de communiquer interactivement avec le réseau Internet d'autre part. Seul ici l'affichage est prévu sur le moniteur 14.

Un autre mode de connexion à la passerelle 19 peut emprunter un câble de télédistribution accessible à l'interface 11. Dans ce cas, l'opérateur de télédistribution participe à l'acheminement d'une requête et ou au retour descendant des messages, toujours composés dans ce cas selon un langage WML, encapsulés selon un protocole WTP, ou HTTP, et formatés alors selon un formatage propre à la transmission sur le câble (en principe selon la norme MPEG ou DVB ou DOCSIS).

Pour leur affichage, les messages Internet utilisent normalement les ressources du décodeur 1 et en particulier du sous-programme de traitement et de visualisation 10, qui comporte notamment des possibilités d'incrustation d'une image réduite 42. Toutefois, pour améliorer la visualisation, on pourra prévoir que le sous-programme 10, et ou les sous-programmes 16 ou 17, comporteront une facilité de zoom. Cette facilité peut être réalisée simplement en faisant lire une mémoire intermédiaire d'image plusieurs fois pour chaque pixel, chaque ligne étant elle-même lue plusieurs fois. Le nombre de fois conditionne le facteur d'agrandissement. Ou bien, pour améliorer la qualité de l'image on peut prévoir que des images destinées à des téléphones mobiles et qui sont des images monochromes soit coloriées, notamment en associant un code de couleur en fonction de plages de niveaux de gris du signal transmis, ou en fonction de certains attributs des éléments de messages qui constituent les messages.

Enfin, compte tenu de la difficulté de régler les décodeurs, on pourra prévoir que des sites Internet spécialisés pour ces réglages soient prévus. Ces sites tels que 43 peuvent proposer des messages qui sont en fait des menus de réglage de décodeurs et ou des tables d'informations relatives aux émissions de télévision numériques reçues dans ces décodeurs. Ces sites 43 présentent alors l'avantage que le téléphone mobile 23, et ou un modem 18 ou un accès câble peuvent permettre de les consulter pour disposer d'informations toujours tenues à jour. Les messages transmis entre ces sites 43 et les décodeurs seront de messages essentiellement composés selon le langage WML.

## Revendications

1. Décodeur de télévision comportant un microprocesseur, une mémoire programme, une interface téléphonique et une interface avec un moniteur de télévision, **caractérisé en ce que** la mémoire programme comporte un sous-programme apte à recevoir des messages écrits en un langage de type WML et un programme pour afficher ces messages sur le moniteur.

2. Décodeur selon la revendication 1, **caractérisé en ce qu'**il comporte un sous programme de transmission selon un protocole WTP.

3. Décodeur selon l'une des revendications 1 à 2, **caractérisé en ce qu'**il comporte un sous programme de transmission selon un protocole HTTP.

4. Décodeur selon l'une des revendications 1 à 3, **caractérisé en ce que** l'interface téléphonique comporte un modem relié au réseau téléphonique commuté.

5. Décodeur selon l'une des revendications 1 à 4, **caractérisé en ce que** l'interface téléphonique comporte un récepteur radioélectrique.

6. Décodeur selon l'une des revendications 1 à 5, **caractérisé en ce que** l'interface téléphonique comporte une interface de câble de télédistribution

7. Décodeur selon l'une des revendications 1 à 6, **caractérisé en ce qu'**il comporte une télécommande munie de circuits pour capter des messages diffusés sur un réseau de téléphonie mobile.

8. Décodeur selon la revendication 7, **caractérisé en ce que** la télécommande comporte un afficheur, un microprocesseur, une mémoire programme et dans cette mémoire programme un programme pour recevoir et décoder des messages en langage WML transmis selon un protocole WTP ou HTTP.

9. Décodeur selon l'une des revendications 1 à 8, **caractérisé en ce qu'**il comporte dans la mémoire programme un sous-programme de zoom des images résultant d'un décodage des messages en langage WML

10. Décodeur selon l'une des revendications 1 à 9, **caractérisé en ce qu'**il comporte un sous-programme de coloration des images résultant d'un décodage des messages en langage WML selon un niveau de gris des parties d'images à représenter.

11. Passerelle d'accès au réseau Internet comportant un organe pour prélever des messages en langage de type WML dans un site Internet, un organe pour encapsuler les messages prélevés selon un protocole de type WTP, **caractérisée en ce que**, pour un décodeur de télévision, elle comporte un organe pour formater ces messages encapsulés en un format compatible avec une transmission sur un réseau téléphonique commuté.

12. Passerelle selon la revendication 11, **caractérisée en ce qu'**elle comporte un organe de traduction pour prélever des messages en langage HTML dans un site Internet et les traduire en langage WML.

13. Site Internet, **caractérisé en ce qu'**il comporte des moyens pour délivrer des messages composés en langage WML représentant des images de menus de réglage de décodeurs de télévision.
